# FASCICULE DE BREVET EUROPEEN

(11) **EP 2 142 787 B1**
(45) Date de publication et mention de la délivrance du brevet: **04.07.2018**
(21) Numéro de dépôt: 08805751.8
(22) Date de dépôt: 07.05.2008
(51) Int. Cl.: F02K 1/52, F02K 1/80

(54) **TURBINE À GAZ À FLUX SÉPARÉS COMPRENANT UND SYSTÈME D'ÉCHAPPEMENT**
MEHRSTROMIGE GASTURBINE MIT EINER ABGASVORRICHTUNG
DUAL FLOW GAS TURBINE COMPRISING AN EXHAUST SYSTEM

(30) Priorité: 10.05.2007 FR 0754968
(43) Date de publication de la demande: 13.01.2010
(73) Titulaire: Safran Ceramics, 33185 Le Haillan (FR)
(72) Inventeur: CONETE, Eric, F-33700 Merignac (FR); BAROUMES, Laurent, F-33000 Bordeaux (FR); HABAROU, Georges, F-33310 Le Bouscat (FR)
(74) Mandataire: Desormiere, Pierre-Louis
(86) Numéro de dépôt international: PCT/FR2008/050801
(87) Numéro de publication internationale: WO 2008/148999

(56) Documents cités:
- GB-A- 621 422
- US-A- 2 479 573
- US-A- 2 580 207
- US-A- 2 604 339
- US-A- 2 613 087

## Description

### Arrière-plan de l'invention

La présente invention se rapporte au domaine général des systèmes utilisés pour l'échappement des gaz issus de turbine à gaz, notamment des turbines à gaz aéronautiques à flux séparés, c'est-à-dire dans lesquels s'écoulent au moins deux flux distincts (flux primaire et flux secondaire). Elle vise plus particulièrement les systèmes d'échappement pour de telles turbines comprenant une tuyère primaire et une tuyère secondaire destinées à être placées concentriquement en sortie de telles turbines à gaz.

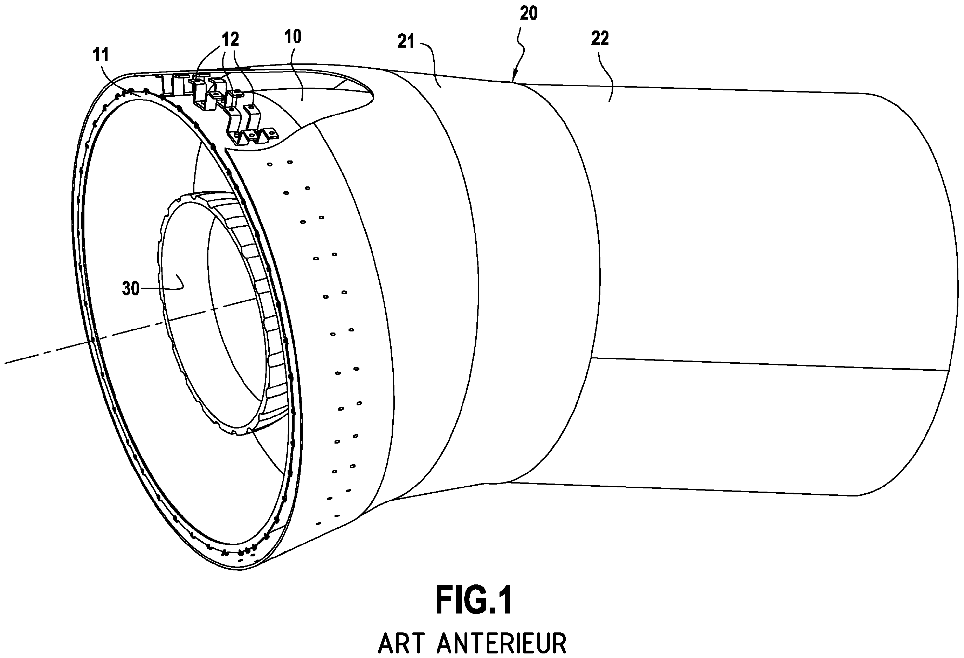

La figure 1 représente partiellement et schématiquement un système d'échappement d'un moteur aéronautique à flux séparés qui comprend une tuyère primaire 10 disposée à l'intérieur d'une tuyère secondaire 20 formée en deux parties, à savoir une tuyère secondaire amont 21 et une tuyère secondaire aval 22 (les termes amont et aval sont utilisés ici en référence à la direction d'écoulement du flux gazeux dans le moteur). Un corps central ou "plug" 30 est présent à l'intérieur de la tuyère primaire 10.

La tuyère primaire 10 est destinée à être raccordée au carter d'échappement du moteur via une bride radiale 11 tandis que la tuyère secondaire 20 est accrochée par sa partie amont 21 à la tuyère primaire 10 au moyen de supports 12. Avec cette architecture, la tuyère secondaire 20 est entièrement supportée par la tuyère primaire 10 qui reprend, au niveau de sa bride radiale 11, l'ensemble des charges mécaniques transitant dans ces deux tuyères.

Par conséquent, la tuyère primaire 10, qui correspond à la partie structurale du système d'échappement devant supporter la tuyère secondaire et résister aux chargements mécaniques et thermiques, doit être réalisée en un matériau réfractaire suffisamment résistant pour supporter toutes ces contraintes. La tuyère primaire est typiquement réalisée en un matériau métallique tel que de l'Inconel®.

Ce type de conception de système d'échappement présente l'inconvénient de soumettre la tuyère primaire à des charges mécaniques importantes, ce qui réduit sa durée de vie et augmente les coûts de maintenance importants.

En outre, cette architecture de système d'échappement présente une masse globale relativement importante en porte-à-faux dans le moteur qui entraîne une augmentation du chargement mécanique sur la bride du carter d'échappement de la tuyère.

Le document US 2 613 087 divulgue un conduit destiné à canaliser un flux entre une turbine et une tuyère. Le document US 2 580 207 divulgue une tuyère formée de deux tronçons disposés l'un derrière l'autre à la sortie d'une chambre de combustion.

### Objet et résumé de l'invention

La présente invention a pour but de proposer une nouvelle conception de système d'échappement pour turbine à gaz à flux séparés qui permet de limiter les charges mécaniques supportées par la tuyère primaire sans affaiblir la résistance de l'ensemble du système.

A cet effet, la présente invention concerne un système d'échappement comprenant une tuyère de canalisation de flux et un carter d'échappement destiné à raccorder la tuyère de canalisation à la sortie de la turbine à gaz, ladite tuyère de canalisation comprenant une tuyère primaire fixée au carter d'échappement et une tuyère secondaire disposée autour de la tuyère primaire, caractérisé en ce que le système d'échappement comprend en outre des moyens pour fixer directement la tuyère secondaire au carter d'échappement, la tuyère secondaire étant supportée par le carter d'échappement indépendamment de la tuyère primaire.

Ainsi, en attachant la tuyère secondaire directement au carter d'échappement indépendamment de la tuyère primaire, on soulage la tuyère primaire de son rôle de support de la tuyère secondaire, ce qui permet de réduire les efforts mécaniques sur la tuyère primaire. Avec la conception selon l'invention, les efforts mécaniques sont répartis entre la tuyère primaire et la tuyère secondaire qui sont chacune fixées au carter d'échappement. Les efforts auxquels sont soumis les tuyères primaire et secondaire sont repris par le carter d'échappement qui présente par nature une structure résistante. La fiabilité et, par conséquent, la durée de vie, du système d'échappement sont améliorées.

Avec l'architecture de système d'échappement selon l'invention, la tuyère primaire interne n'a plus de rôle structural puisqu'elle ne supporte plus la tuyère secondaire. Elle assure seulement une fonction de canalisateur ("liner") pour le flux primaire ou flux "chaud". La masse de la tuyère primaire peut donc être sensiblement diminuée notamment par l'utilisation d'un matériau CMC à la place d'un matériau métallique.

Selon un aspect de l'invention, une pluralité d'éléments de liaison souples sont répartis autour de l'extrémité amont de la tuyère primaire, ces éléments étant fixés sur la paroi externe de la tuyère primaire et sur la bride du carter d'échappement. Contrairement aux systèmes d'échappement de l'art antérieur où la tuyère primaire est fixée rigidement sur le carter d'échappement, l'utilisation de liaisons souples entre la tuyère primaire et le carter d'échappement permet de compenser les dilatations différentielles entre le carter et la tuyère primaire notamment dans le cas où ces deux éléments sont réalisés en des matériaux ayant des coefficients de dilatation différents.

Selon un autre aspect de l'invention, au moins une partie d'un élément de liaison souple de la tuyère primaire est engagée avec un élément de liaison de la tuyère secondaire de manière à ce que les orifices de fixation à la bride du carter d'échappement desdits éléments coopèrent entre eux. Avec cette configuration, on utilise un même organe de fixation (par exemple une liaison boulonnée) pour fixer à la fois une partie d'un élément de liaison souple de la tuyère primaire et un élément de liaison de la tuyère secondaire au carter, ce qui permet d'optimiser la masse globale du système.

La tuyère secondaire est formée d'une tuyère secondaire amont fixée au carter d'échappement et d'une tuyère secondaire aval reliée à l'extrémité de la tuyère secondaire amont opposée à celle fixée au carter, les deux tuyères secondaires pouvant être réalisées en des matériaux ayant des coefficients de dilatation différents. En particulier, la tuyère secondaire amont est réalisée en matériau métallique et la tuyère secondaire aval est réalisée en matériau composite à matrice céramique.

Selon une réalisation particulière, la partie de bord de la tuyère secondaire amont et la partie de bord de la tuyère secondaire aval sont engagées l'une avec l'autre avec un jeu réduit ou sans jeu et en ce que l'une des tuyères secondaires présente le long de son bord d'engagement une succession de languettes séparées par des fentes et formées intégralement avec la tuyère secondaire, lesdites tuyères secondaires étant assemblées par fixation mutuelle au niveau d'au moins certaines des languettes. De cette manière, la fonction de liaisons souples pour compenser les dilatations différentielles entre les deux tuyères secondaires amont et aval est intégrée directement à l'une de ces deux tuyères secondaires, d'où une simplification de l'assemblage entre les deux tuyères secondaires.

Les languettes sont formées, de préférence, mais non exclusivement, dans la tuyère secondaire amont qui présente le coefficient de dilatation le plus élevé.

La présente invention concerne également une turbine à gaz à flux séparés de moteur aéronautique comprenant un système d'échappement tel que défini précédemment.

L'invention vise encore un procédé d'assemblage d'un système d'échappement comprenant une tuyère de canalisation de flux et un carter d'échappement destiné à raccorder la tuyère de canalisation à la sortie de la turbine à gaz, ladite tuyère de canalisation comprenant une tuyère primaire fixée au carter d'échappement et une tuyère secondaire disposée autour de la tuyère primaire, caractérisé en ce que l'on fixe la tuyère secondaire directement au carter d'échappement de manière à supporter ladite tuyère secondaire sur le carter d'échappement indépendamment de la tuyère primaire.

La tuyère primaire peut être réalisée en matériau composite à matrice céramique et fixée au carter d'échappement par une pluralité d'éléments de liaison souples disposés autour de l'extrémité amont de la tuyère primaire.

Selon un mode de mise en oeuvre particulier, on engage au moins une partie d'un élément de liaison souple de la tuyère primaire avec un élément de liaison de la tuyère secondaire de manière à ce que les orifices de fixation à la bride du carter d'échappement desdits éléments coopèrent entre eux.

La tuyère secondaire est formée d'une tuyère secondaire amont fixée au carter d'échappement et d'une tuyère secondaire aval reliée à l'extrémité de la tuyère secondaire amont opposée à celle fixée au carter. La tuyère secondaire amont peut être réalisée en matériau métallique et la tuyère secondaire aval peut être réalisée en matériau composite à matrice céramique.

La réalisation de liaisons souples entre les deux tuyères secondaires peut être obtenue en engageant la partie de bord de la tuyère secondaire amont et la partie de bord de la tuyère secondaire aval l'une avec l'autre avec un jeu réduit ou sans jeu et en formant le long du bord d'engagement de l'une des deux tuyères secondaires une succession de languettes séparées les unes des autres par des fentes obtenues par découpe ou usinage dans le matériau de la tuyère secondaire, les tuyères secondaires étant assemblées par fixation d'au moins certaines des languettes sur la partie de bord de l'autre tuyère secondaire.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1, déjà décrite, est une vue schématique d'un système d'échappement pour turbine à gaz à flux séparés selon l'art antérieur ;
- la figure 2 est une vue schématique partielle d'un système d'échappement pour turbine à gaz à flux séparés selon un mode de réalisation de l'invention ;
- la figure 3 est vue une éclatée montrant des éléments de liaison utilisés dans le système d'échappement de la figure 2 pour fixer les tuyères primaire et secondaire au carter d'échappement ;
- la figure 4 est une vue en perspective agrandie d'un élément de liaison souple de la figure 3 ;
- la figure 5 est une vue à l'échelle agrandie d'un détail de la figure 2 ;
- la figure 6 est une vue en coupe partielle selon le plan VI-VI de la figure 5 ;
- les figures 7 et 8 sont des vues en perspective agrandie d'éléments de liaison de la figure 3 ;
- la figure 9 est une vue partielle en coupe qui montre très schématiquement un mode d'assemblage de tuyères secondaires par liaisons souples ;
- la figure 10 est une vue à échelle agrandie d'un détail de la figure 2 ; et
- la figure 11 est une vue en coupe selon le plan XI-XI de la figure 10.

### Description détaillée d'un mode de réalisation

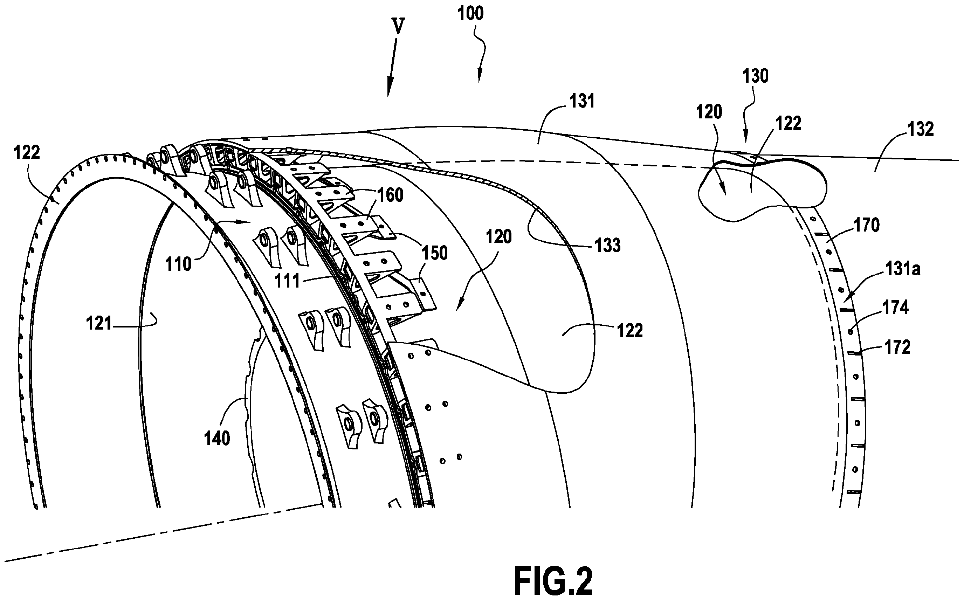

Un domaine particulier mais non exclusif d'application de l'invention est celui des turbines à gaz à flux séparés de moteurs aéronautiques. La figure 2 illustre un système d'échappement 100 pour turbine à gaz aéronautique à flux séparés conformément à un mode de réalisation de l'invention. Le système d'échappement comprend un carter d'échappement 110 destiné à être fixé à la sortie de la de la turbine à gaz en amont de sa chambre de combustion (non représentée).

Le système d'échappement comprend en outre une tuyère de canalisation du flux issu de la turbine à gaz disposée en aval du carter d'échappement 110 et comprenant une tuyère primaire 120 et une tuyère secondaire 130, cette dernière étant formée d'une partie de paroi amont ou tuyère secondaire amont 131 et d'une partie de paroi aval ou tuyère secondaire aval 132, qui prolonge la tuyère primaire 120 et la tuyère secondaire amont 131 vers l'aval.

La tuyère primaire 120 délimite entre sa paroi interne 121 et un élément et corps central ou "plug" 140 disposé à l'intérieur de cette dernière un canal d'écoulement pour le flux primaire ou flux "chaud" issu de la chambre de combustion de la turbine.

La tuyère secondaire amont 131 délimite entre sa paroi interne 133 et la paroi externe 122 de la tuyère primaire 120 un espace annulaire d'écoulement dans lequel circule un flux de contournement ou flux "froid" issu d'une soufflante (non représentée) en entrée de la turbine et ayant notamment une fonction de flux de refroidissement notamment pour la paroi externe 122 de la tuyère primaire.

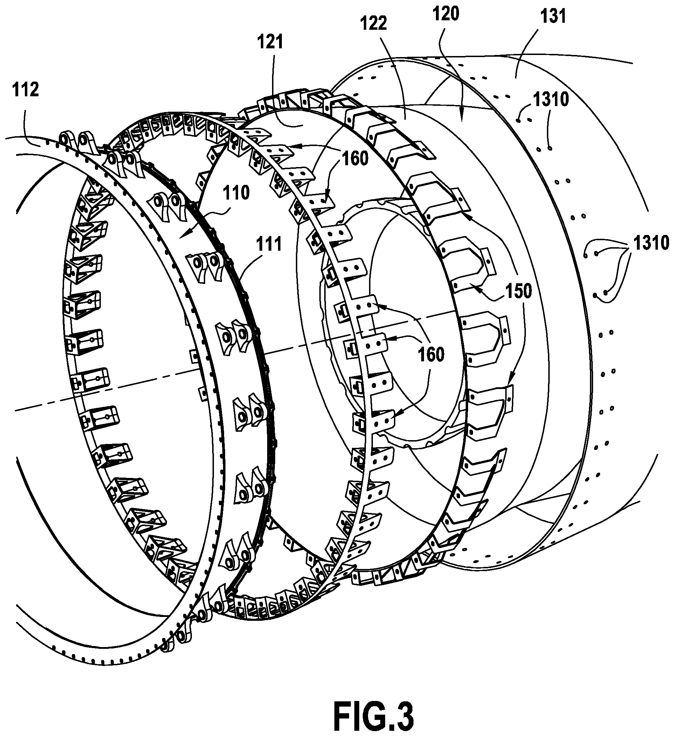

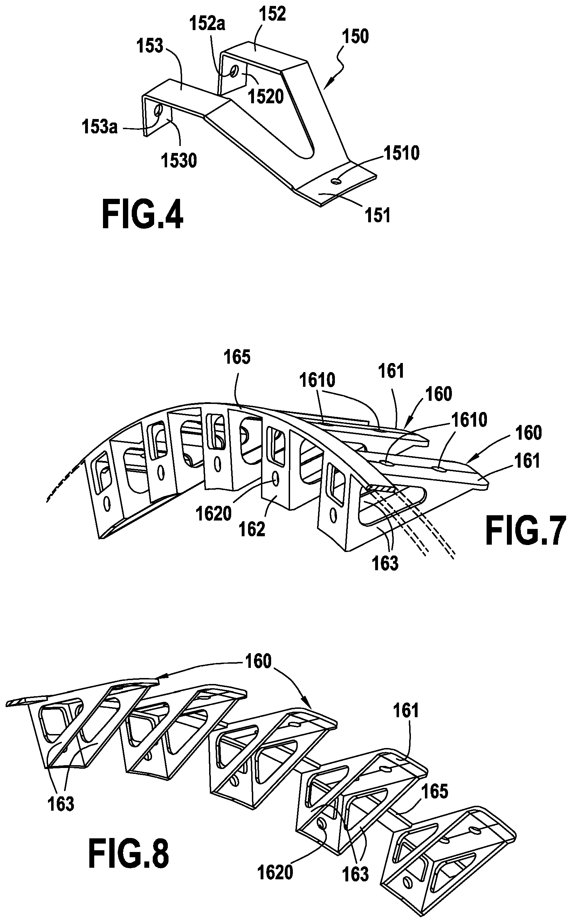

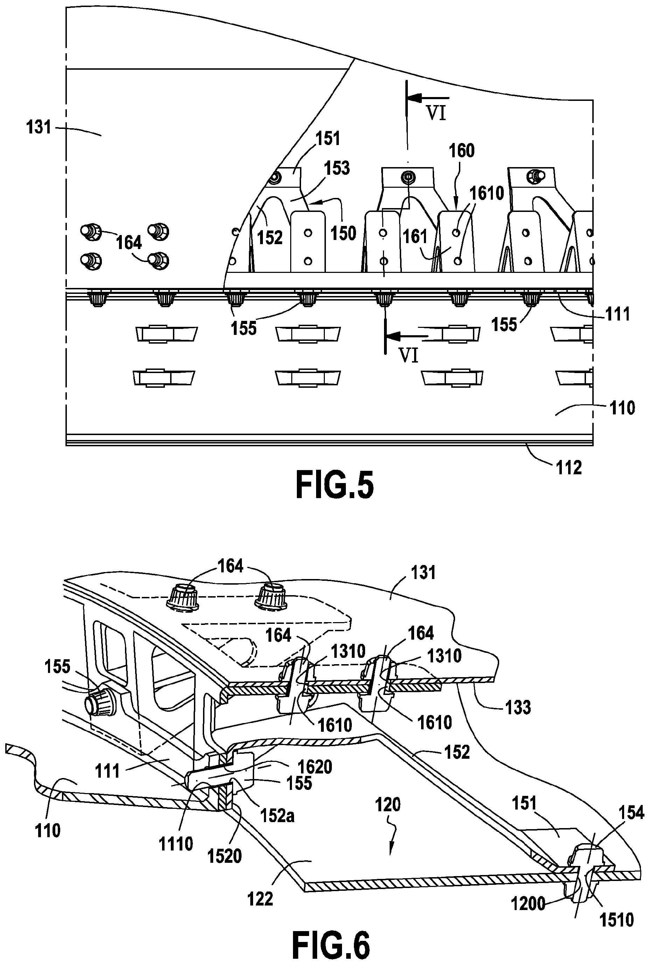

Conformément à la présente invention, la tuyère primaire 120 et la tuyère secondaire 130, ou plus précisément la tuyère secondaire amont 131, sont chacune fixées sur le carter d'échappement 110 par des moyens d'attache propres. Comme le montrent les figures 3 et 4, la tuyère primaire 120 est fixée au carter 110 au moyen d'une pluralité d'éléments de liaison souples 150 repartis uniformément sur la paroi externe 122 de la tuyère primaire au niveau de son extrémité amont. Tel que représenté sur la figure 4, chaque élément de liaison souple 150 comprend une base 151 destinée à être fixée sur la paroi externe 122 de la tuyère primaire 120 et qui comporte un orifice 1510 pour le passage de liaisons boulonnées 154 (figure 6). Chaque orifice 1510 coopère avec un orifice 1200 ménagé sur la tuyère primaire 120. L'élément de liaison souple 150 comprend deux pattes de fixation 152 et 153 dont l'extrémité libre est rabattue pour former deux portions 152a et 153a destinées à être fixées au carter d'échappement. A cet effet, les portions 152a et 153a comportent respectivement des orifices 1520 et 1530 qui coopèrent avec des orifices 1110 ménagés sur la bride de fixation 111 du carter d'échappement 110 et permettant le passage de liaisons boulonnées 155 (figure 6).

La fixation des éléments 150 sur la tuyère primaire 120 et sur la bride de fixation 111 peut être réalisée avec tout type d'organe de fixation adapté autre que des liaisons boulonnées (par exemple avec des rivets).

Les éléments de liaison souple 150 permettent de compenser les dilatations différentielles qui peuvent survenir entre la tuyère primaire 120 et le carter d'échappement 110. Tout autre forme d'éléments permettant de réaliser une liaison souple entre le carter et la tuyère primaire apte à compenser les dilatations différentielles peut être envisagée.

La tuyère secondaire 130 est fixée au carter d'échappement par sa tuyère secondaire amont 131 au moyen d'une pluralité d'éléments de liaison 160 repartis uniformément sur la paroi interne 133 de la tuyère secondaire amont au niveau de son extrémité amont. Comme représenté sur les figures 7 et 8, chaque élément de liaison 160 comprend une première portion 161 destinée à être fixée sur la paroi interne 133 de la tuyère secondaire amont et qui comporte deux orifices 1610 pour le passage de liaisons boulonnées 164 (figure 6). Les orifices 1610 coopèrent respectivement avec des orifices 1310 ménagés sur la tuyère secondaire amont 131.

Les éléments de liaison 160 comprennent une deuxième portion 162 sensiblement perpendiculaire à la première portion 161 et destinée à être fixée à la bride de fixation 111 du carter d'échappement. Chaque deuxième portion 162 comporte un orifice 1620 qui coopère avec un orifice 1110 ménagés sur la bride de fixation 111 du carter d'échappement 110 et permettant le passage des liaisons boulonnées 155 (figure 6). La structure des éléments de liaison 160 est renforcée par des bras de liaison 163 qui s'étendent entre les extrémités libres des première et deuxième portions 161 et 162. En outre, les éléments de liaison 160 sont reliés ensemble par une couronne 165. Les éléments de liaison peuvent toutefois être indépendants les uns des autres.

Dans le mode de réalisation décrit ici et comme illustré plus particulièrement sur les figures 2 et 5, les pattes de fixation 152 et 153 des éléments de liaison souple 150 sont engagées dans les éléments de liaison 160 de manière que leur orifice de passage pour la liaison boulonnée coopère ensemble et avec ceux de la bride de fixation 111 du carter d'échappement 110. Avec cette configuration, on utilise une seule liaison boulonnée pour la fixation d'une patte d'un élément 150 et d'un élément 160, ce qui permet de réduire la masse de l'ensemble du système. Toutefois, les éléments 160 et 150 peuvent être aussi disposés les uns à côté des autres et être fixés au carter par des organes de fixation utilisant des orifices distincts sur la bride de fixation.

La tuyère secondaire amont 131 est typiquement en titane ou en alliage de titane.

La tuyère secondaire aval 132, habituellement en matériau métallique réfractaire tel que de l'Inconel®, peut avantageusement être réalisée en matériau composite à matrice céramique (CMC) dont la tenue aux températures élevées permet de supporter sans dommages la température du flux gazeux chaux à ce niveau du système d'échappement, sans refroidissement. On note que le flux "froid" s'échappant de l'espace annulaire entre la paroi interne 133 de la tuyère secondaire amont 131 et la paroi externe 122 de la tuyère primaire 120 constitue un film protecteur d'air frais à la partie amont de la surface intérieure de la tuyère secondaire amont 132.

L'utilisation de composite CMC pour la tuyère secondaire aval permet donc de limiter les besoins globaux en air de refroidissement et d'avoir une structure simple de la tuyère secondaire aval, tout en réduisant de façon sensible la masse par rapport à un matériau métallique.

Les matériaux CMC sont en effet remarquables par leurs propriétés thermostructurales et par leur capacité à conserver ces propriétés aux températures élevées. Ils sont formés par un renfort fibreux en fibres réfractaires (carbone ou céramique) qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. La densification du renfort fibreux peut être réalisée par voie liquide (imprégnation par une résine précurseur de la matrice céramique et transformation en céramique par réticulation et pyrolyse, le processus pouvant être répété) ou par voie gazeuse (infiltration chimique en phase vapeur).

Par ailleurs, puisque la tuyère primaire 120 dans le système d'échappement selon l'invention ne supporte pas la tuyère secondaire, elle n'a pas de fonction structurale et doit seulement assurer une fonction de canalisateur ("liner") pour le flux interne chaud. La tuyère primaire 120 peut, par conséquent, être réalisée avec un matériau plus léger qu'un matériau métallique réfractaire type Inconel® comme c'est habituellement le cas. La tuyère primaire 120 peut avantageusement être réalisée en matériau CMC comme décrit ci-dessus pour la tuyère secondaire aval, le matériau CMC présentant une bonne tenue mécanique et chimique faces aux températures élevées tout en étant plus léger qu'un matériau métallique.

Dans le cas où la tuyère secondaire amont est en matériau métallique et la tuyère secondaire aval est en matériau CMC comme décrit précédemment, les matériaux CMC ayant un coefficient de dilatation différent de celui des matériaux métalliques, généralement sensiblement inférieur, il est nécessaire que la liaison entre ces deux parties présente la souplesse nécessaire pour compenser les différences de variations dimensionnelles d'origine thermique entre les pièces reliées entre elles, sans endommagement de celles-ci et de la liaison.

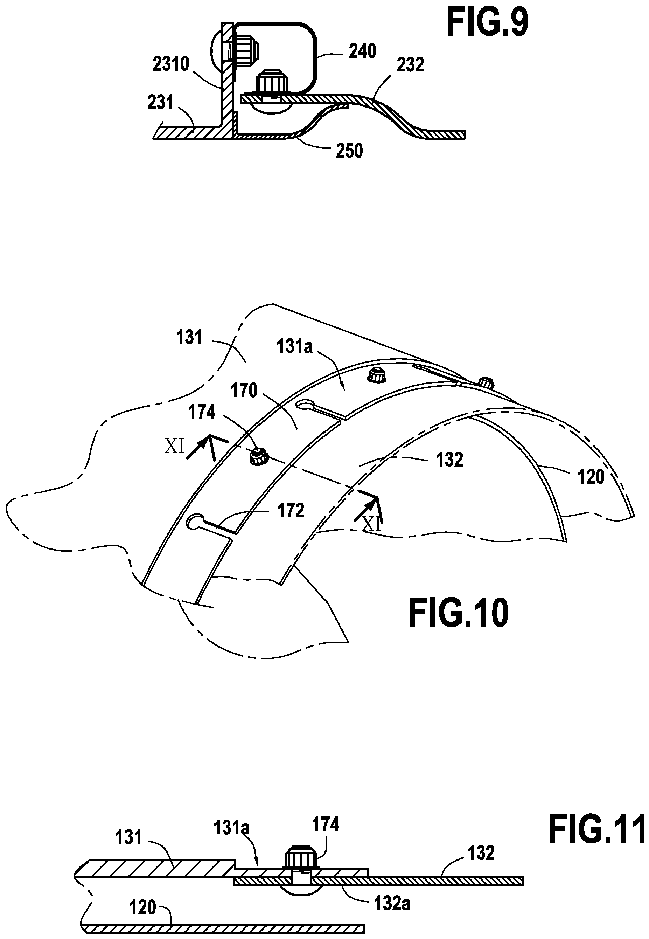

A cet effet, la tuyère secondaire amont et la tuyère secondaire aval peuvent être assemblées avec des liaisons souples permettant de compenser les dilatations différentielles entre les deux tuyères secondaires. Comme représenté sur la figure 9, les liaisons souples sont matérialisées par des pattes de liaison métalliques 240 qui sont recourbées de manière à être élastiquement déformables. A une extrémité, chaque patte de liaison 240 est fixée par exemple par boulonnage à une bride 2310 solidaire de la tuyère secondaire amont 231, au voisinage de son bord d'extrémité aval. A l'autre extrémité, chaque patte 240 est fixée par exemple par boulonnage sur la paroi de la tuyère secondaire aval 232, au voisinage de son bord d'extrémité amont. Un jeu étant présent entre les parties de bords annulaires adjacentes des tuyères 231, 232, l'étanchéité est assurée par un dispositif d'étanchéité 250 tel qu'un joint métallique fendu à pétales fixé à l'extrémité aval de la tuyère 231.

L'utilisation de telles pattes de liaison implique toutefois un certain nombre de manipulations et de réglages lors du montage. En outre, la présence des pattes de liaison et d'une bride ainsi que la nécessité d'un dispositif d'étanchéité se traduisent par une augmentation de masse et de coût de production.

A cet effet et comme le montrent les figures 2, 10 et 11, la fonction de liaison souples peut être intégrée directement à l'une des deux tuyères secondaires de manière à simplifier l'assemblage.

Plus précisément, la partie de bord annulaire aval 131a de la tuyère secondaire amont 131 et la partie de bord annulaire amont 132a de la tuyère secondaire aval 132 sont engagées mutuellement, la partie de bord 131a entourant la partie de bord 132a.

Des languettes 170 sont formées dans la partie de bord 131a, séparées par des fentes 172, les languettes étant obtenues directement par découpe ou usinage des fentes 172 dans le matériau métallique de la tuyère secondaire amont 131. Les languettes 170 et fentes 172 s'étendent en direction sensiblement axiale à partir de l'extrémité aval de la partie de bord 131a, les fentes se terminant par un évidement arrondi pour éviter la concentration de contraintes au fond des fentes.

Les tuyères 131 et 132 sont assemblées par boulonnage, les têtes des boulons 174 s'appuyant sur la face intérieure de la tuyère secondaire aval 132. La fixation par boulonnage est réalisée au niveau de chaque languette ou au moins au niveau de certaines d'entre elles. Une fixation par rivetage pourrait aussi être envisagée.

De préférence, les parties de bords annulaires 132a, 131a sont engagées l'une dans l'autre sans jeu et avec précontrainte à froid de manière qu'un contact mutuel soit maintenu aux températures élevées rencontrées normalement en service. En faisant en sorte que la partie de bord annulaire 132a soit engagée dans la partie de bord annulaire 131a sur une longueur au moins égale à celle des fentes 172, une étanchéité est alors assurée au niveau de la liaison entre les tuyères secondaires amont et aval.

Les languettes 170 permettent par leur capacité de déformation élastique de compenser les dilatations différentielles entre les pièces assemblées. Les languettes 170 permettent également de compenser des défauts ou irrégularités de forme au niveau des parties de bord assemblées. Comme illustré, la partie de bord 131a dans laquelle sont formées les languettes 170 peut être amincie par rapport au reste de la paroi de la tuyère secondaire amont 131. La capacité de déformation élastique des matériaux métalliques étant généralement supérieure à celle des matériaux CMC, il est préférable de former les languettes dans la pièce en matériau métallique. Toutefois, la formation des languettes dans la pièce en matériau CMC ne saurait être exclue.

## Revendications

1. Turbine à gaz à flux séparés de moteur aéronautique, **caractérisée en ce qu'**elle comprend un système d'échappement (100) pour canaliser les flux issus d'une turbine à gaz à flux séparés, le système comprenant une tuyère de canalisation de flux et un carter d'échappement (110) destiné à raccorder la tuyère de canalisation à la sortie de la turbine à gaz, ladite tuyère de canalisation comprenant une tuyère primaire (120) fixée au carter d'échappement (110) et une tuyère secondaire (130) disposée autour de la tuyère primaire,
le système d'échappement comprenant en outre des moyens pour fixer directement la tuyère secondaire (130) au carter d'échappement (110), ladite tuyère secondaire étant supportée par le carter d'échappement indépendamment de la tuyère primaire (120).

2. Turbine à gaz à flux séparés selon la revendication 1, **caractérisé en ce qu'**il comprend une pluralité d'éléments de liaison (160) répartis autour de l'extrémité amont de la tuyère secondaire (130), lesdits éléments de liaison étant fixés sur la paroi interne (133) de la tuyère secondaire (130) et sur la bride (111) du carter d'échappement (110).

3. Turbine à gaz à flux séparés selon la revendication 1 ou 2, **caractérisé en ce que** la tuyère primaire (130) est réalisée en matériau composite à matrice céramique.

4. Turbine à gaz à flux séparés selon l'une quelconque des revendications 1 à 3, **caractérisé en ce qu'**il comprend une pluralité d'éléments de liaison souples (150) répartis autour de l'extrémité amont de la tuyère primaire (120), lesdits éléments de liaison souples étant fixés sur la paroi externe (122) de la tuyère primaire (120) et sur la bride (111) du carter d'échappement (110).

5. Turbine à gaz à flux séparés selon la revendication 4, **caractérisé en ce qu'**au moins une partie (1520; 1530) d'un élément de liaison souple (150) de la tuyère primaire (120) est engagée avec un élément de liaison (160) de la tuyère secondaire (130) de manière que les orifices de fixation (152a; 153a; 1620) à la bride (111) du carter d'échappement (110) desdits éléments coopèrent entre eux.

6. Turbine à gaz à flux séparés selon l'une quelconque des revendications 1 à 5, **caractérisé en ce que** la tuyère secondaire (130) est formée d'une tuyère secondaire amont (131) fixée au carter d'échappement et d'une tuyère secondaire aval (132) reliée à l'extrémité de la tuyère secondaire amont opposée à celle fixée au carter (110).

7. Turbine à gaz à flux séparés selon la revendication 6, **caractérisé en ce que** la tuyère secondaire amont (131) est réalisée en matériau métallique et la tuyère secondaire aval (132) est réalisée en matériau composite à matrice céramique.

8. Turbine à gaz à flux séparés selon la revendication 7, **caractérisé en ce que** la partie de bord (131a) de la tuyère secondaire amont (131) et la partie de bord (132a) de la tuyère secondaire aval (132) sont engagées l'une avec l'autre avec un jeu réduit ou sans jeu et **en ce que** l'une (131) des tuyères secondaires présente le long de son bord d'engagement une succession de languettes (170) séparées par des fentes (172) et formées intégralement avec la tuyère secondaire (131), lesdites tuyères secondaires étant assemblées par fixation mutuelle au niveau d'au moins certaines des languettes.

9. Turbine à gaz à flux séparés selon la revendication 8, **caractérisé en ce que** les languettes (170) sont formées dans la tuyère secondaire amont.

10. Procédé de fabrication d'une turbine à gaz à flux séparés **caractérisé en ce qu'**il comprend l'assemblage d'un système d'échappement (100) destiné à canaliser les flux issus de la turbine à gaz à flux séparés, le système comprenant une tuyère de canalisation de flux et un carter d'échappement (110) destiné à raccorder la tuyère de canalisation à la sortie de la turbine à gaz, ladite tuyère de canalisation comprenant une tuyère primaire (120) fixée au carter d'échappement (110) et une tuyère secondaire (130) disposée autour de la tuyère primaire,
dans lequel on fixe la tuyère secondaire (130) directement au carter d'échappement (110) de manière à supporter ladite tuyère secondaire sur le carter d'échappement indépendamment de la tuyère primaire (120).

11. Procédé selon la revendication 10, **caractérisé en ce que** l'on dispose une pluralité d'éléments de liaison (160) autour de l'extrémité amont de la tuyère secondaire (130), lesdits éléments de liaison étant fixés sur la paroi interne (133) de la tuyère secondaire (130) et sur la bride (111) du carter d'échappement (110).

12. Procédé selon la revendication 10 ou 11, **caractérisé en ce que** la tuyère primaire (130) est réalisée en matériau composite à matrice céramique.

13. Procédé selon l'une quelconque des revendications 10 à 12, **caractérisé en ce que** l'on dispose une pluralité d'éléments de liaison souples (150) autour de l'extrémité amont de la tuyère primaire (120), lesdits éléments de liaisons souples étant fixés sur la paroi externe (122) de la tuyère primaire (120) et sur la bride (111) du carter d'échappement (110).

14. Procédé selon la revendication 13, **caractérisé en ce que** l'on engage au moins une partie (1520; 1530) d'un élément de liaison souple (150) de la tuyère primaire (120) avec un élément de liaison (160) de la tuyère secondaire (130) de manière que les orifices de fixation (152a; 153a; 1620) à la bride (111) du carter d'échappement (110) desdits éléments coopèrent entre eux.

15. Procédé selon l'une quelconque des revendications 10 à 14, **caractérisé en ce que** la tuyère secondaire (130) est formée d'une tuyère secondaire amont (131) fixée au carter d'échappement (110) et d'une tuyère secondaire aval (132) reliée à l'extrémité de la tuyère secondaire amont opposée à celle fixée au carter (110).

16. Procédé selon la revendication 15, **caractérisé en ce que** la tuyère secondaire amont (131) est réalisée en matériau métallique et la tuyère secondaire aval (132) est réalisée en matériau composite à matrice céramique.

17. Procédé selon la revendication 16, **caractérisé en ce que** l'on engage la partie de bord (131a) de la tuyère secondaire amont (131) et la partie de bord (132a) de la tuyère secondaire aval (132) l'une avec l'autre avec un jeu réduit ou sans jeu et **en ce que** l'on forme le long du bord d'engagement de l'une (131) des deux tuyères secondaires une succession de languettes (170) séparées les unes des autres par des fentes (172) obtenues par découpe ou usinage dans le matériau de la tuyère secondaire (131), et on assemble les tuyères secondaires par fixation d'au moins certaines des languettes sur la partie de bord de l'autre tuyère secondaire.

18. Procédé selon la revendication 17, **caractérisé en ce que** les languettes (170) sont formées dans la partie de bord (131a) de la tuyère secondaire amont (131).

## Patentansprüche

1. Mehrstromige Gasturbine eines Flugzeugmotors, **dadurch gekennzeichnet, dass** sie ein Abgassystem (100) umfasst, um die von einer mehrstromigen Gasturbine ausgegebenen Ströme zu kanalisieren, wobei das System eine Strom-Kanalisationsrohrleitung und ein Abgasgehäuse (110) umfasst, das bestimmt ist, die Kanalisationsrohrleitung mit dem Ausgang der Gasturbine zu verbinden, wobei die Kanalisationsrohrleitung eine am Abgasgehäuse (110) befestigte primäre Rohrleitung (120) und eine um die primäre Rohrleitung angeordnete sekundäre Rohrleitung (130) umfasst,
wobei das Abgassystem ferner Mittel umfasst, um die sekundäre Rohrleitung (130) direkt am Abgasgehäuse (110) zu befestigen, wobei die sekundäre Rohrleitung von dem Abgasgehäuse unabhängig von der primären Rohrleitung (120) gestützt wird.

2. Mehrstromige Gasturbine nach Anspruch 1, **dadurch gekennzeichnet, dass** sie eine Vielzahl von Verbindungselementen (160) umfasst, die um das oberstromige Ende der sekundären Rohrleitung (130) verteilt sind, wobei die Verbindungselemente auf der Innenwand (133) der sekundären Rohrleitung (130) und auf dem Flansch (111) des Abgasgehäuses (110) befestigt sind.

3. Mehrstromige Gasturbine nach Anspruch 1 oder 2, **dadurch gekennzeichnet, dass** die primäre Rohrleitung (130) aus Verbundmaterial mit keramischer Matrix hergestellt ist.

4. Mehrstromige Gasturbine nach einem der Ansprüche 1 bis 3, **dadurch gekennzeichnet, dass** sie eine Vielzahl von elastischen Verbindungselementen (150) umfasst, die um das oberstromige Ende der primären Rohrleitung (120) verteilt sind, wobei die elastischen Verbindungselemente auf der Außenwand (122) der primären Rohrleitung (120) und auf dem Flansch (111) des Abgasgehäuses (110) befestigt sind.

5. Mehrstromige Gasturbine nach Anspruch 4, **dadurch gekennzeichnet, dass** mindestens ein Teil (1520; 1530) eines elastischen Verbindungselements (150) der primären Rohrleitung (120) mit einem Verbindungselement (160) der sekundären Rohrleitung (130) derart im Eingriff ist, dass die Befestigungsöffnungen (152a; 153a; 1620) am Flansch (111) des Abgasgehäuses (110) der Elemente miteinander zusammenwirken.

6. Mehrstromige Gasturbine nach einem der Ansprüche 1 bis 5, **dadurch gekennzeichnet, dass** die sekundäre Rohrleitung (130) von einer oberstromigen sekundären Rohrleitung (131) gebildet ist, die am Abgasgehäuse befestigt ist, und von einer unterstromigen sekundären Rohrleitung (132), die mit dem Ende der oberstromigen sekundären Rohrleitung gegenüber dem verbunden ist, das mit dem Gehäuse (110) verbunden ist.

7. Mehrstromige Gasturbine nach Anspruch 6, **dadurch gekennzeichnet, dass** die oberstromige sekundäre Rohrleitung (131) aus metallischem Material hergestellt ist und die unterstromige sekundäre Rohrleitung (132) aus Verbundmaterial mit keramischer Matrix hergestellt ist.

8. Mehrstromige Gasturbine nach Anspruch 7, **dadurch gekennzeichnet, dass** der Randteil (131a) der oberstromigen sekundären Rohrleitung (131) und der Randteil (132a) der unterstromigen sekundären Rohrleitung (132) mit einem reduzierten Spiel oder ohne Spiel ineinander eingreifen und dass die eine (131) der sekundären Rohrleitungen entlang ihres Eingriffsrands eine Abfolge von Laschen (170) aufweist, die durch Schlitze (172) getrennt und vollständig mit der sekundären Rohrleitung (131) ausgebildet sind, wobei die sekundären Rohrleitungen durch gegenseitige Befestigung im Bereich von mindestens einigen der Laschen verbunden sind.

9. Mehrstromige Gasturbine nach Anspruch 8, **dadurch gekennzeichnet, dass** die Laschen (170) in der oberstromigen sekundären Rohrleitung ausgebildet sind.

10. Verfahren zur Herstellung einer mehrstromigen Gasturbine, **dadurch gekennzeichnet, dass** es die Verbindung eines Abgassystems (100) umfasst, das bestimmt ist, um die von einer mehrstromigen Gasturbine ausgegebenen Ströme zu kanalisieren, wobei das System eine Strom-Kanalisationsrohrleitung und ein Abgasgehäuse (110) umfasst, das bestimmt ist, die Kanalisationsrohrleitung mit dem Ausgang der Gasturbine zu verbinden, wobei die Kanalisationsrohrleitung eine am Abgasgehäuse (110) befestigte primäre Rohrleitung (120) und eine um die primäre Rohrleitung angeordnete sekundäre Rohrleitung (130) umfasst,
wobei die sekundäre Rohrleitung (130) direkt am Abgasgehäuse (110) derart befestigt wird, dass die sekundäre Rohrleitung auf dem Abgasgehäuse unabhängig von der primären Rohrleitung (120) gestützt wird.

11. Verfahren nach Anspruch 10, **dadurch gekennzeichnet, dass** eine Vielzahl von Verbindungselementen (160) um das oberstromige Ende der sekundären Rohrleitung (130) angeordnet werden, wobei die Verbindungselemente auf der Innenwand (133) der sekundären Rohrleitung (130) und auf dem Flansch (111) des Abgasgehäuses (110) befestigt werden.

12. Verfahren nach Anspruch 10 oder 11, **dadurch gekennzeichnet, dass** die primäre Rohrleitung (130) aus Verbundmaterial mit keramischer Matrix hergestellt wird.

13. Verfahren nach einem der Ansprüche 10 bis 12, **dadurch gekennzeichnet, dass** eine Vielzahl von elastischen Verbindungselementen (150) um das oberstromige Ende der primären Rohrleitung (120) angeordnet werden, wobei die elastischen Verbindungselemente auf der Außenwand (122) der primären Rohrleitung (120) und auf dem Flansch (111) des Abgasgehäuses (110) befestigt werden

14. Verfahren nach Anspruch 13, **dadurch gekennzeichnet, dass** mindestens ein Teil (1520; 1530) eines elastischen Verbindungselements (150) der primären Rohrleitung (120) mit einem Verbindungselement (160) der sekundären Rohrleitung (130) derart in Eingriff gebracht wird, dass die Befestigungsöffnungen (152a; 153a; 1620) am Flansch (111) des Abgasgehäuses (110) der Elemente miteinander zusammenwirken.

15. Verfahren nach einem der Ansprüche 10 bis 14, **dadurch gekennzeichnet, dass** die sekundäre Rohrleitung (130) von einer oberstromigen sekundären Rohrleitung (131) gebildet wird, die am Abgasgehäuse (110) befestigt ist, und von einer unterstromigen sekundären Rohrleitung (132), die mit dem Ende der unterstromigen sekundären Rohrleitung gegenüber dem verbunden wird, das mit dem Gehäuse (110) verbunden wird.

16. Verfahren nach Anspruch 15, **dadurch gekennzeichnet, dass** die oberstromige sekundäre Rohrleitung (131) aus metallischem Material hergestellt wird und die unterstromige sekundäre Rohrleitung (132) aus Verbundmaterial mit keramischer Matrix hergestellt wird.

17. Verfahren nach Anspruch 16, **dadurch gekennzeichnet, dass** der Randteil (131a) der oberstromigen sekundären Rohrleitung (131) und der Randteil (132a) der unterstromigen sekundären Rohrleitung (132) mit einem reduzierten Spiel oder ohne Spiel ineinander in Eingriff gebracht werden und dass entlang des Eingriffsrands der einen (131) der zwei sekundären Rohrleitungen eine Abfolge von Laschen (170) ausgebildet wird, die durch Schlitze (172) voneinander getrennt und durch Schneiden oder Bearbeiten in dem Material der sekundären Rohrleitung (131) erhalten werden, und dass die sekundären Rohrleitungen durch Befestigen von mindestens einigen der Laschen auf dem Randteil der anderen sekundären Rohrleitung verbunden werden.

18. Verfahren nach Anspruch 17, **dadurch gekennzeichnet, dass** die Laschen (170) im Randteil (131a) der oberstromigen sekundären Rohrleitung ausgebildet werden.

## Claims

1. A by-pass gas turbine for an aeroengine, **characterized in that** it comprises an exhaust system (100) for channeling the streams from a by-pass gas turbine, the system comprising a stream-channeling nozzle and an exhaust casing (110) for connecting the channeling nozzle to the outlet of the gas turbine, said channeling nozzle comprising a primary nozzle (120) fastened to the exhaust casing (110) and a secondary nozzle (130) placed around the primary nozzle, the exhaust system further comprising means for fastening the secondary nozzle (130) directly to the exhaust casing (110), said secondary nozzle being supported by the exhaust casing independently of the primary nozzle (120).

2. A by-pass gas turbine according to claim 1, **characterized in that** it includes a plurality of connection elements (160) distributed around the upstream end of the secondary nozzle (130), said connection elements being fastened to the inner wall (133) of the secondary nozzle (130) and to the flange (111) of the exhaust casing (110).

3. A by-pass gas turbine according to claim 1 or claim 2, **characterized in that** the primary nozzle (130) is made of a ceramic matrix composite material.

4. A by-pass gas turbine according to any one of claims 1 to 3, **characterized in that** it includes a plurality of flexible connection elements (150) distributed around the upstream end of the primary nozzle (120), said flexible connection elements being fastened to the outer wall (122) of the primary nozzle (120) and to the flange (111) of the exhaust casing (110).

5. A by-pass gas turbine according to claim 4, **characterized in that** at least a portion (1520; 1530) of a flexible connection element (150) of the primary nozzle (120) is engaged with a connection element (160) of the secondary nozzle (130) in such a manner that the orifices (152a; 153a; 1620) for fastening to the flange (111) of the exhaust casing (110) in said elements co-operate with one another.

6. A by-pass gas turbine according to any one of claims 1 to 5, **characterized in that** the secondary nozzle (130) is made up of an upstream secondary nozzle (131) fastened to the exhaust casing and a downstream secondary nozzle (132) connected to the end of the upstream secondary nozzle that is opposite from its end fastened to the casing (110).

7. A by-pass gas turbine according to claim 6, **characterized in that** the upstream secondary nozzle (131) is made of a metallic material and the downstream secondary nozzle (132) is made of a ceramic matrix composite material.

8. A by-pass gas turbine according to claim 7, **characterized in that** the edge portion (131a) of the upstream secondary nozzle (131) and the edge portion (132a) of the downstream secondary nozzle (132) are engaged one in the other with little or no clearance, and **in that** one of the two secondary nozzles (131) presents along its engagement edge a succession of tongues (170) that are separated from one another by slots (172) and that are formed integrally with said one of the secondary nozzles (131), said secondary nozzles being assembled together by being mutually fastened via at least some of the tongues.

9. A by-pass gas turbine according to claim 8, **characterized in that** the tongues (170) are formed in the upstream secondary nozzle.

10. A method for manufacturing a by-pass gas turbine **characterized in that** it includes the assembling an exhaust system (100) for channeling the streams from the by-pass gas turbine, the system comprising a stream-channeling nozzle and an exhaust casing (110) for connection to the channeling nozzle at the outlet from the gas turbine, said channeling nozzle comprising a primary nozzle (120) fastened to the exhaust casing (110) and a secondary nozzle (130) placed around the primary nozzle, wherein the secondary nozzle (130) is fastened directly to the exhaust casing (110) so as to support said secondary nozzle via the exhaust casing independently of the primary nozzle (120).

11. A method according to claim 10, **characterized in that** a plurality of connection elements (160) are placed around the upstream end of the secondary nozzle (130), said connection elements being fastened to the inner wall (133) of the secondary nozzle (130) and to the flange (111) of the exhaust casing (110).

12. A method according to claim 10 or claim 11, **characterized in that** the primary nozzle (130) is made of a ceramic matrix composite material.

13. A method according to any one of claims 10 to 12, **characterized in that** a plurality of flexible connection elements (150) are placed around the upstream end of the primary nozzle (130), said flexible connection elements being fastened to the outer wall (122) of the primary nozzle (120) and to the flange (111) of the exhaust casing (110).

14. A method according to claim 13, **characterized in that** at least a portion (1520; 1530) of a flexible connection element (150) of the primary nozzle (120) is engaged with a connection element (160) of the secondary nozzle (130) in such a manner that the orifices (152a; 153a; 1620) for fastening to the flange (111) of the exhaust casing (110) in said elements co-operate with one another.

15. A method according to any one of claims 10 to 14, **characterized in that** the secondary nozzle (130) is made up of an upstream secondary nozzle (131) fastened to the exhaust casing (110) and a downstream secondary nozzle (132) connected to the end of the upstream secondary nozzle that is opposite from its end fastened to the casing (110).

16. A method according to claim 15, **characterized in that** the upstream secondary nozzle (131) is made of a metallic material and the downstream secondary nozzle (132) is made of a ceramic matrix composite material.

17. A method according to claim 16, **characterized in that** the edge portion (131a) of the upstream secondary nozzle (131) and the edge portion (132a) of the downstream secondary nozzle (132) are engaged one in the other with little or no clearance, and **in that** a succession of tongues (170) that are separated from one another by slots (172) are formed along the engagement edge of one of the two secondary nozzles (131), the slots being obtained by cutting out or machining the material of said one of the secondary nozzles (131), and the secondary nozzles are assembled together by fastening at least some of the tongues to the edge portion of the other secondary nozzle.

18. A method according to claim 17, **characterized in that** the tongues (170) are formed in the edge portion (131a) of the upstream secondary nozzle (131).
